# EUROPÄISCHE PATENTANMELDUNG

(11) **EP 1 225 503 A2**
(43) Veröffentlichungstag der Anmeldung: **24.07.2002**
(21) Anmeldenummer: 01128258.9
(22) Anmeldetag: 28.11.2001
(51) Int. Cl.: G06F 1/18

(54) **Einbaurahmen**

(30) Priorität: 21.12.2000 DE 10064114
(71) Anmelder: Fujitsu Siemens Computers GmbH, 81739 München (DE)
(72) Erfinder: Knoop, Franz-Josef, 33142 Büren-Steinhausen (DE); Blume, Johannes, 33034 Brakel (DE); Flothe, Helmut, 33181 Wünnenberg (DE)
(74) Vertreter: Epping Hermann & Fischer

(57) **Zusammenfassung**

Die Erfindung betrifft einen Einbaurahmen (7) für Steckkarten (1) in einem Computer, Server oder dergleichen. Der Einbaurahmen (7) dient zur Erleichterung bei der Montage beziehungsweise Demontage der Steckkarte (1) in dem Computer. Desweiteren wird durch den Einbaurahmen (7) eine gezielte Kühlluftführung ermöglicht. Der Einbaurahmen (7) ist klemmend mit der Steckkarte (1) verbindbar und mit einer Führung (11) ausgebildet, welche ein geführtes Einstecken der Steckkarten (1) in den Computer ermöglicht.

## Beschreibung

Die Erfindung betrifft einen Einbaurahmen für Steckkarten in einem Computer, Server oder dergleichen.

Bestimmte Steckkarten sind hochsensibel. So dürfen einige Steckkarten, wie zum Beispiel gewisse Controller nur ESD - geschützten Arbeitsplätzen (ESD = electorstatic discharge) oder mit EGB-gerechten Hilfsmitteln getauscht werden. EGBgerechte Hilfsmittel sind zum Beispiel eine EGB-Schutzmatte und EGB-Armbänder, durch welche elektrostatische Aufladungen verhindert werden.

Desweiteren wird bei vielen Steckkarten gefordert, daß sie während des Betriebes (hot plug) getauscht werden können müssen.

Beim Tausch von Steckkarten während des Betriebes besteht insbesondere bei unmittelbar nebeneinander angeordneten Steckkarten sowohl beim Ein- wie auch beim Ausbau die Gefahr von Kurzschlüssen durch schräges Einsetzen beziehungsweise durch Verkippen beim Herausziehen.

Der Erfindung liegt daher die Aufgabe zugrunde, eine Lösung aufzuzeigen, welche eine kartenschonende Montage beziehungsweise Demontage solcher hochsensiblen Steckkarten erlaubt und durch welche die Gefahr von Kurzschlüssen beim Tausch während des Betriebes des Computers vermindert beziehungsweise komplett ausgeschlossen ist.

Diese Aufgabe wird erfindungsgemäß gelöst durch einen Einbaurahmen für Steckkarten in einem Computer, Server oder dergleichen, wobei dieser klemmend mit der Steckkarte verbindbar ist und eine Führung aufweist, welche ein geführtes Einstekken der Steckkarte in den Computer erlaubt.

Durch den Einbaurahmen ist die Steckkarte zum einen geschützt aufgenommen und zum anderen ist das Montagehandling erleichtert.

Insbesondere ist beim Einbau in den Computer ein schräges Einstecken durch die Führung am Einbaurahmen ausgeschlossen. Somit ist eine exakte Montagestellung garantiert und sind Kurzschlüsse bei einer Montage während des Betriebes mit benachbarten Steckkarten ausgeschlossen.

In der Regel sind die Steckkarten als Slotkarten ausgebildet und ist die Führung am Einbaurahmen gegenüberliegend der Slotseite angeordnet.

Zur leichteren Demontage der Steckkarte ist gemäß einer bevorzugten Ausbildung an der Oberseite des Einbaurahmens ein Griff zum Herausziehen der Steckkarte vorgesehen.

Die klemmende Fixierung des Einbaurahmens an der Steckkarte wird vorzugsweise durch Haltenasen erzielt.

Durch eine federnde Ausbildung der Haltenasen wird in einfacher Weise die Montage sowie Demontage gewährleistet.

Um die Steckkarte in einer eindeutigen Lage am Einbaurahmen festlegen zu können, sind an diesem vorzugsweise Anschläge ausgebildet.

Gemäß einer bevorzugten Ausführungsform ist der Einbaurahmen in demjenigen Bereich, in welchem er das freie Ende der Steckkarte bis zur gegenüberliegenden Computerinnenseite überbrückt, flächig ausgebildet und mit Durchbrüchen versehen.

Hierdurch wird eine gezielte Führung der Kühlluft erreicht. Bei kurzen Einsteckkarten ohne Einbaurahmen wird die Kühlluft stets hinter dem Kartenende verwirbelt. Durch den Einschubrahmen wird die Kühlluft jeweils entlang der Karte und dem Einschubrahmen durch das Gehäuse gelenkt und somit eine wesentlich effektivere Kühlung erzielt.

Weitere vorteilhafte Ausgestaltungen der Erfindung sind in den Unteransprüchen sowie in der nachfolgenden Beschreibung offenbart.

Anhand eines in den Zeichnungen dargestellten Ausführungsbeispieles wird die Erfindung näher erläutert. In der Zeichnung zeigt die einzige
- Figur: in Schrägansicht eine Steckkarte mit Einbaurahmen, wie sie in einem Computer eingesetzt ist.

Die Figur zeigt schematisiert eine Steckkarte 1, wie sie in einem Computer eingesetzt ist. Von dem Computer sind lediglich ein Motherboard 2 mit Steckplätzen 3 sowie ein Teil des Gehäuses 4 dargestellt, wobei an der Innenseite dieses Gehäuseteiles Führungsaufnahmen 5 ausgebildet sind. Die Führungsaufnahmen 5 sind in der Regel für Steckkarten vorgesehen, die sich über die komplette Breite des Computergehäuses erstrekken.

Werden jedoch kurze Steckkarten, wie im dargestellten Ausführungsbeispiel die Steckkarte 1, verwendet, so würde diese lediglich an der Slotseite am Slotfeld des Computers sowie im Steckplatz 3 festgelegt sein.

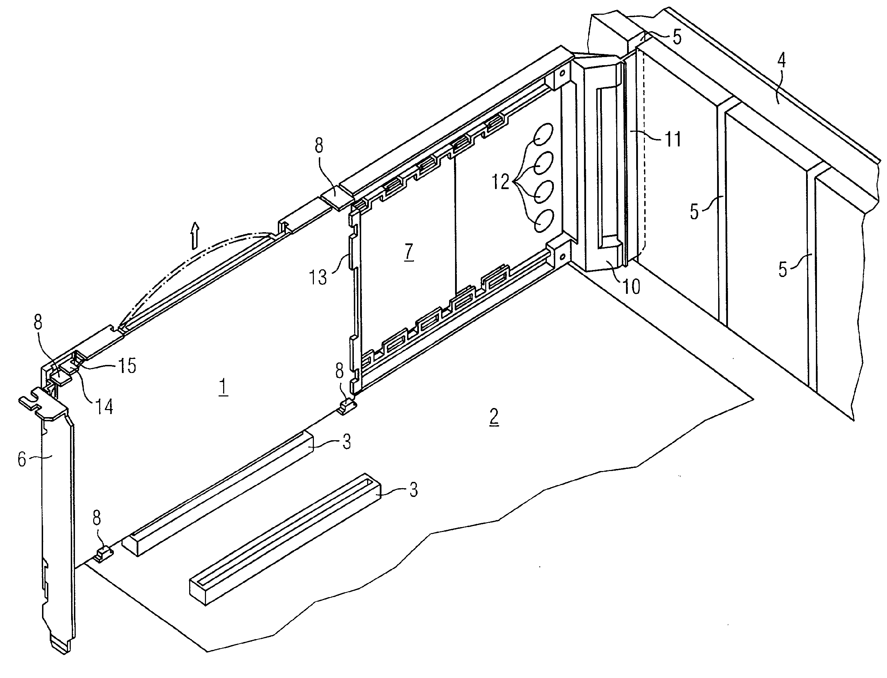

In Figur 1 ist lediglich die Steckkarte 1 mit dem Slotwinkel 6 dargestellt, welcher wie gewöhnlich durch Verschrauben oder durch ein Klemmteil am Slotfeld des Computers festgelegt wird.

Um bei hochsensiblen Steckkarten ein schräges Einstecken zu vermeiden beziehungsweise die Montage zu vereinfachen, sind diese erfindungsgemäß mit einem Einbaurahmen 7 versehen. Der Einbaurahmen 7 ist über Haltenasen 8 klemmend an der Steckkarte 1 festgelegt.

Die Haltenasen 8 sind federnd ausgebildet, um zum einen die Steckkarte 1 zwischen die Haltenasen 8 einfügen und bei der Demontage entnehmen zu können.

An der Oberseite ist der Einbaurahmen 7 mit einem Griff 9 versehen, welcher als Lasche ausgebildet ist und wie im gestrichelt dargestelltem Zustand so nach oben abgehoben werden kann, daß er ein Umfassen mit den Fingern zum Herausziehen des Einbaurahmens 7 samt Steckkarte 1 zuläßt.

Der Einbaurahmen 7 ist im wesentlichen flächig ausgebildetund erstreckt sich nahezu über die gesamte Breite des Computergehäuses. An seinem freien Ende ist der Einbaurahmen 7 mit einem Bügel 10 sowie einer an dem Bügel befestigten Führung 11 ausgebildet, welche im montierten Zustand in den Führungsaufnahmen 5 des Gehäuseteiles 4 aufgenommen ist.

Durch die Führung 11 ist gewährleistet, daß die Steckkarte 1 über den Einbaurahmen 7 fluchtend und senkrecht in den Steckplatz 3 auf dem Motherboard 2 eingesteckt wird. Idealerweise ist die Führung 11 als Führungsschiene und die Führungsaufnahme 5 als Aufnahmenut ausgebildet.

Hierdurch wird verhindert, daß beim Austausch während des Betriebes eine Berührung mit einer benachbarten Steckkarte und somit eventuell ein Kurzschluß erfolgt.

Das Wechseln der Steckkarten hat oft auch bei schlechten Lichtverhältnissen zu erfolgen. Auch bei solchen Umgebungsbedingungen gewährleistet der Einbaurahmen über die Führung 11 ein leichtes und ordnungsgemäßes Einstecken der Steckkarte 1.

Durch die flächige Ausbildung des Einbaurahmens 7 ist auch eine gezielte Luftführung entlang der Steckkarten 1 gewährleistet. Bei kurzen Steckkarten erfolgte bisher stets eine Verwirbelung hinter dem freien Ende der Steckkarte. Eine Beeinflussung der Kühlluftführung ist über eine entsprechende Anordnung von Durchbrüchen 12 in der Steckkarte 7 möglich.

Um eine eindeutige Lage des Einbaurahmens 7 relativ zur Steckkarte 1 zu gewährleisten, ist dieser mit einem Anschlag 13 versehen. Bei der Montage wird die Einbaukarte erst zwischen die beiden in der Nähe des Slotwinkels 6 angeordneten Haltenasen 8 eingelegt, wobei die in der Nähe des Anschlages 13 angeordneten Haltenasen noch außerhalb des freien Endes der Steckkarte 1 angeordnet sind.

Danach wird der Einschubrahmen 7 bis zum Anschlag 13 auf die Steckkarte 1 aufgeschoben. Hierbei umgreifen die in der Nähe des Anschlages 13 angeordneten Haltenasen 8 ebenfalls die Ober- und Unterkante des Einschubrahmens.

Um diese Montagestellung zu sichern, ist in der Nähe des Slotwinkels 6 ein Sicherungsschieber 14 angeordnet. Zur sicherung wir dieser niedergedrückt und hintergreift im niedergedrückten Zustand eine Kante 15 der Steckkarte 1.

An dem Sicherungsschieber 14 ist ebenfalls eine Haltenase angeordnet, welche im niedergedrückten Zustand die Oberkante der Steckkarte 1 umgreift.

Im verriegelten Zustand des Sicherungsschiebers 14 ist nur noch eine Relativbewegung zwischen Einbaurahmen und Steckkarte im Rahmen der federnden Eigenschaften der Haltenasen 8 möglich.

## Patentansprüche

1. Einbaurahmen (7) für eine Steckkarte (1) in einem Computer, Server oder dergleichen, wobei dieser
a) klemmend mit der Steckkarte (1) verbindbar ist und
b) eine Führung (11) aufweist, welche ein geführtes Einstekken der Steckkarte (1) in den Computer erlaubt.

2. Einbaurahmen nach Anspruch 1,
**dadurch gekennzeichnet, daß**
die Steckkarte (1) einen Slotwinkel (6) aufweist und die Führung (11) gegenüberliegend des Slotwinkeles (6) angeordnet ist.

3. Einbaurahmen nach einem der Ansprüche 1 oder 2,
**dadurch gekennzeichnet, daß**
an der Oberseite des Einbaurahmens (7) ein Griff (9) zum Herausziehen der Steckkarte (1) vorgesehen ist.

4. Einbaurahmen nach einem der Ansprüche 1 bis 3,
**dadurch gekennzeichnet, daß**
mehrere Haltenasen (8) vorgesehen sind, welche die Oberkante beziehungsweise die Unterkante im montierten Zustand umgreifen.

5. Einbaurahmen nach Anspruch 4,
**dadurch gekennzeichnet, daß**
die Haltenasen (8) federnd ausgebildet sind.

6. Einbaurahmen nach einem der Ansprüche 1 bis 5,
**dadurch gekennzeichnet, daß**
zumindest ein Anschlag (13) am Einbaurahmen (7) vorgesehen ist, der beim Zusammenbau der Steckkarte (1) und des Einbaurahmens (7) die Endmontagestellung definiert.

7. Einbaurahmen nach einem der Ansprüche 1 bis 6,
**dadurch gekennzeichnet, daß**
dieser einen Sicherungsschieber (14) aufweist.

8. Einbaurahmen nach Anspruch 7,
**dadurch gekennzeichnet, daß**
der Sicherungsschieber (14) eine Haltenase aufweist.

9. Einbaurahmen nach einem der Ansprüche 1 bis 8,
**dadurch gekennzeichnet, daß**
dieser flächig ausgebildet ist.

10. Einbaurahmen nach Anspruch 9,
**dadurch gekennzeichnet, daß**
im Bereich des Einbaurahmens (7) hinter dem freien Ende der Steckkarte (1) Durchbrüche (12) vorgesehen sind.

11. Einbaurahmen nach einem der Ansprüche 1 bis 10,
**dadurch gekennzeichnet, daß**
die Führung (11) an einem Bügel (10) ausgebildet ist.

12. Einbaurahmen nach einem der Ansprüche 1 bis 11,
**dadurch gekennzeichnet, daß**
die Führung (11) als Führungsschiene ausgebildet ist.

13. Computer mit einem Motherboard (2) mit Steckplätzen (3), einem Gehäuse (4) mit Slotöffnungen auf der einen Seite und Führungsaufnahmen (5) auf der gegenüberliegenden Seite sowie einer Steckkarte (1) mit einem Einbaurahmen (7) nach einem der Ansprüche 1 bis 10, wobei die Führung (11) am Einbaurahmen in einer entsprechenden Führungsaufnahme (5) am Gehäuse (4) des Computers aufgenommen ist.

14. Computer nach Anspruch 13,
**dadurch gekennzeichnet, daß**
die Führungsaufnahmen (5) als Kontaktfedern ausgebildet sind.

15. Computer nach Anspruch 12 oder 13,
**dadurch gekennzeichnet, daß**
die Steckkarte (1) während des Betriebes des Computers austauschbar ist.
